Europäisches Patentamt

European Patent Office

Office européen des brevets

(19)

(11) Publication number: **0 322 042 B1**

(12) **EUROPEAN PATENT SPECIFICATION**

(45) Date of publication of patent specification: **21.10.92** (51) Int. Cl.⁵: **B29C 67/14**, B29C 43/36

(21) Application number: **88202900.2**

(22) Date of filing: **15.12.88**

(54) **Process reducing of mould cycle time.**

(30) Priority: **21.12.87 US 136061**

(43) Date of publication of application:
**28.06.89 Bulletin 89/26**

(45) Publication of the grant of the patent:
**21.10.92 Bulletin 92/43**

(84) Designated Contracting States:
**BE DE ES FR GB IT NL SE**

(56) References cited:
**EP-A- 0 234 341**     **EP-A- 0 243 751**
**FR-A- 1 500 832**     **US-A- 3 309 450**
**US-A- 4 238 437**     **US-A- 4 239 625**

**PATENT ABSTRACTS OF JAPAN, vol. 8, no. 5
(M-267)[1442], 11th January 1984; & JP-A-58
168 510 (MITSUBISHI JIDOSHA KOGYO K.K.)
04-10-1983**

**PATENT ABSTRACTS OF JAPAN, vol. 9, no.
146 (M-389)[1869], 21st June 1985; & JP-A-60
25 717 (SHINKOUBE DENKI K.K.) 08-02-1985**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Epel, Joseph Norman
22559 Bellbrook
Southfield Michigan 48034(US)**

EP 0 322 042 B1

Rank Xerox (UK) Business Services

## Description

The invention relates to a process for reducing cycle time in the moulding of fibre-reinforced thermoset articles.

Various moulding methods are discussed in chapters 4 and 5 of the book entitled, Handbook of Reinforced Plastics, Society of the Plastics Industry, Inc., copyright 1964, published by the Reinhold Publishing Corporation, Library of Congress Catalog Card No. 64-15205. Whenever contact moulding, bag moulding, or similar procedures are being used to fabricate articles of manufacture formed from fiber-reinforced resins, single die moulds will typically be required.

To economically produce these articles using any type of mould, the rate of article production must be maximized to allow the quick recovery of the capital costs associated with the purchase of the mould. The mould cycle time must be minimized.

In the case of an article that incorporates fibers or filaments within the hardenable liquid, it is desirable to quickly wet these materials. In the case of an article that comprises a fibre reinforcement matrix and it is desirable to have the thermosetting resin composition flood all internal voids and interstices within the matrix quickly such that the curing time of the resin may be kept to a minimum.

A process therefore needs to be developed that permits rapid flow of the resin into the mould and which permits rapid wetting of these fibers.

The present invention provides a process for moulding a thermoset article of manufacture including the steps of:

- providing a mould having a surface, said mould surface having at least one opening defined downwardly therein,
- locating deflatable member means within said opening, said deflatable member means having a fluid chamber containing fluid defined in the interior thereof, said deflatable member means having a moveable wall formed between a portion of said fluid chamber and a moveable wall surface of said deflatable member means located adjacent said mould surface,
- placing fluid movement means in communication with said fluid chamber,
- inserting a preshaped member of fibre-reinforcement matrix in the mould,
- closing the mould,
- removing fluid from said fluid chamber so as to move said moveable wall inward a selected distance relative to said mould surface, thereby defining a channel to permit flow of thermosetting resin composition through said channel into the mould,

- adding fluid to said fluid chamber to move said moveable wall surface flush with said mould surface,
- retaining said thermosetting composition in said mould for a sufficient period to dimensionally stabilize the article of manufacture,
- opening the mould and removing said article from said mould.

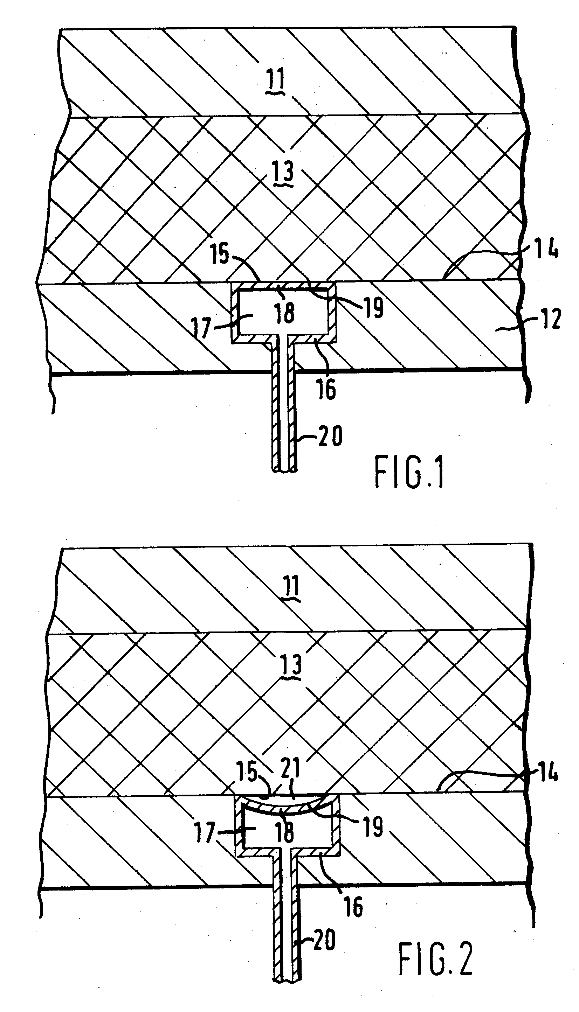

These and other features and advantages of the present invention will become apparent from the following detailed description, wherein reference is made to Figures 1 and 2.

Fig. 1 is a schematic representation in a side view in partial cross section showing the deflatable member positioned within an opening defined downwardly within the mould section.

Fig. 2 is a schematic representation in a side view and partial cross section of the same deflatable member now defining a channel for flow of a hardenable liquid beneath the preshaped filament member.

In Figs. 1 and 2, 11 and 12 represent the upper and lower parts of a mould, respectively, 13 represents a preshaped member of reinforcement fibre matrix.

The mould can be seen to comprise a surface 14 having at least one opening 15 defined downwardly therein. Surface 14 of the mould preferably coincides with the lower surface of the preshaped member of fibre-reinforcement matrix. Opening 15 can be embodied in the form of a longitudinal groove which in the figures is shown in cross-section. More than one groove can be present in the lower mould surface. The mould is referred to in a generic sense wherein it is understood to include structures associated with vacuum bag moulding, pressure bag moulding, autoclave moulding, vacuum injection moulding, cable clave moulding or the like.

Deflatable member means 16 are located within the opening 15, which comprise in a preferred embodiment a tube fitting in the groove and having a rectangular cross-section made from rubber or other elastomeric material. A fluid chamber 17 is provided in the interior of member 16. The deflatable member means 16 can be seen to have a moveable wall 18 formed between a portion of the fluid chamber 17 and wall surface 19 which is located adjacent to mould surface 14.

Fluid chamber 17 is connected via tube 20 to a pump (not shown) and reservoir (not shown), that are used to supply and remove fluid to and from deflatable member means 16.

Fig. 1 shows the fluid chamber 17 in the inflated state, when fluid 22 is supplied, the moveable wall 18 is caused to move upward to a position wherein surface 19 is flush with surface 14 of the mould. Withdrawal of fluid from chamber 17 causes wall 18 to move downward to the deflated position shown in Fig. 2, thus defining a channel 21 through which thermosetting resin can be supplied to the interior of the mould to fill the internal voids of the fibre matrix.

Suitable thermosetting resins are selected from polyester resins, phenolic resins, vinyl ester resins, epoxy resins, polyurethane resins, polyisocyanurate resins, urethane resins, and polyamide resins.

The fibre matrix can comprise fiberglass cloth, tape, woven roving, or any other collection of fibers, cloth, or material used to reinforce the resin. Preshaping to closely fit the internal volume of the mould can be carried out by any known method, compressing being preferred. The flow of the thermosetting resin beneath certain portions of the filament matrix accelerates supply of resin to the filament matrix thereby allowing shortening the moulding cycle time.

Wall 18 may be formed by a co-extrusion technique wherein a material such as nylon may be used to form the outer surface of the wall, to allow the wall to easily part from the finished article. In addition, mould-release agents may be employed.

The moulding may comprise at least one thermosetting resin injection port typically located centrally within the lower surface area of the mould. To allow the rapid supply of the resin over a relative large portion of the lower mould surface area the deflatable member means 16 preferably extend radially outward away from that port. It should be well recognized that many other flow patterns may be used to accomplish the same mechanical result. For example, the deflatable member means may comprise a series of linear parallel fluid chambers, evenly spread over the lower surface area of the mould.

## Claims

1.  A process for moulding a thermoset article of manufacture including the steps of:
    - providing a mould having a surface, said mould surface having at least one opening defined downwardly therein,
    - locating deflatable member means within said opening, said deflatable member means having a fluid chamber containing fluid defined in the interior thereof, said deflatable member means having a moveable wall formed between a portion of said fluid chamber and a moveable wall surface of said deflatable member means located adjacent said mould surface,
    - placing fluid movement means in communication with said fluid chamber,
    - inserting a preshaped member of fibre-reinforcement matrix in the mould,
    - closing the mould,
    - removing fluid from said fluid chamber so as to move said moveable wall inward a selected distance relative to said mould surface, thereby defining a channel to permit flow of thermosetting resin composition through said channel into the mould,
    - adding fluid to said fluid chamber to move said moveable wall surface flush with said mould surface,
    - retaining said thermosetting composition in said mould for a sufficient period to dimensionally stabilize the article of manufacture,
    - opening the mould, and removing said article from said mould.

## Patentansprüche

1.  Verfahren zum Formen eines wärmegehärteten Herstellungsgegenstandes, umfassend die Schritte des:
    - Schaffens einer Form, die eine Fläche hat, welche wenigstens eine in ihr in Abwärtsrichtung gebildete Öffnung hat,
    - Anordnens einer einen entleerbaren bzw. zusammenfallbaren Teil aufweisenden Einrichtung in der Öffnung, wobei die einen entleerbaren bzw. zusammenfallbaren Teil aufweisende Einrichtung eine Fluidkammer hat, welche ein Fluid enthält und im Inneren der Einrichtung gebildet ist, und wobei die einen entleerbaren bzw. zusammenfallbaren Teil aufweisende Einrichtung eine bewegliche Wand hat, die zwischen einem Teil der Fluidkammer und einer beweglichen Wandfläche der einen entleerbaren bzw. zusammenfallbaren Teil aufweisenden Einrichtung, die neben der Formfläche liegt, gebildet ist,
    - Anordnens einer Fluidbewegungseinrichtung in Verbindung mit der Fluidkammer,
    - Einsetzens eines vorgeformten Teils aus einer faserverstärkten Matrix in die Form,
    - Schließens der Form,
    - Entfernens von Fluid aus der Fluidkammer derart, daß die bewegliche Wand um eine ausgewählte Strecke relativ zu der Formfläche nach innen bewegt wird, wodurch ein Kanal bestimmt wird, um das Fließen einer wärmehärtenden Harzmasse durch den Kanal hindurch in die Form zu ermöglichen,
    - Zugebens von Fluid zu der Fluidkammer, um die bewegliche Wandfläche in Ausrichtung mit der Formfläche zu bewegen,
- Haltens der wärmehärtenden Masse in der Form während einer ausreichenden Periode, um den Herstellungsgegenstand dimensional zu stabilisieren, und
- Öffnens der Form und Entfernens des Gegenstandes aus der Form.

**Revendications**

1. Un procédé pour le moulage d'un article manufacturé thermodurci, qui comprend les étapes selon lesquelles :
   - on prévoit un moule ayant une surface, cette surface du moule ayant au moins une ouverture s'étendant vers le bas,
   - on place un dispositif dégonflable dans cette ouverture, ce dispositif dégonflable comportant une chambre à fluide contenant un fluide située à l'intérieur du dispositif, ce dispositif dégonflable ayant une paroi mobile formée entre une portion de la chambre à fluide et une surface de paroi mobile du dispositif dégonflable située près de la surface du moule,
   - on place un dispositif de déplacement du fluide en communication avec la chambre à fluide,
   - on introduit dans le moule un élément préformé de matrice fibreuse de renforcement,
   - on ferme le moule,
   - on enlève du fluide de la chambre à fluide de manière à déplacer la paroi mobile vers l'intérieur jusqu'à une distance choisie par rapport à la surface du moule, définissant ainsi un canal pour permettre un écoulement de la composition de résine thermodurcissable par le canal dans le moule,
   - on ajoute du fluide dans la chambre à fluide de manière à amener la surface de la paroi mobile au ras de la surface du moule,
   - on maintient la composition de résine thermodurcissable dans le moule pendant une période suffisante pour que l'article manufacturé devienne dimensionnellement stable,
   - on ouvre le moule et on enlève l'article du moule.

FIG.1

FIG.2